# DEMANDE DE BREVET EUROPEEN

(11) **EP 1 426 894 A1**
(43) Date de publication de la demande: **09.06.2004**
(21) Numéro de dépôt: 03293048.9
(22) Date de dépôt: 05.12.2003
(51) Int. Cl.: G06F 17/60

(54) **Procédé et système pour traiter des documents associés à des opérations logistiques**

(30) Priorité: 05.12.2002 FR 0215392
(71) Demandeur: DAT'WAY, 91000 Evry (FR)
(72) Inventeur: Dubos, Roland, F-91070 Bondoufle (FR); Bogros, Jean-Luc, F-91100 Corbeil Essonnes (FR)
(74) Mandataire: Pontet, Bernard

(57) **Abrégé**

Procédé de traitement de documents associés à des opérations logistiques, notamment des bons de livraison, comprenant :
- une numérisation de ces documents pour générer des fichiers images desdits documents ;
- sur un site central de traitement, une analyse desdits fichiers images pour déterminer des données d'identification de chacun desdits fichiers images, et un archivage de ces fichiers images ainsi identifiés.

Le procédé comprend en outre, pour chaque fichier image d'un document dont l'identification n'a pas abouti, une transmission, vers des moyens de visualisation graphique, d'un composant logiciel de type applet prévu pour appeler l'image de ce document, une saisie de données d'identification dudit document extraites de ladite image appelée, une génération, à partir des données d'identification ainsi saisies, d'un fichier indexé associé au fichier image dudit document

Utilisation dans le domaine du transport de colis et de la logistique

## Description

La présente invention concerne un procédé pour traiter des documents, notamment des documents liés au monde du transport et de la logistique.

Par traitement de documents, on entend ici la centralisation, la reconnaissance, l'indexation, l'archivage et la restitution de documents.

Dans le domaine du transport de marchandises, la preuve d'une livraison d'une marchandise ou d'un colis est constituée par un récépissé ou bon de livraison émargé par une personne recevant la marchandise. La conservation et le suivi de ces documents sont essentiels pour les opérateurs de transport, car ils matérialisent les services faits et doivent être présentés en cas de contestation.

Ainsi, il devient essentiel pour un commerçant ou industriel de pouvoir disposer d'une preuve de la livraison de colis à ses clients. Or, dans le processus de livraison, peuvent intervenir plusieurs acteurs tels que des commissionnaires et des transporteurs livreurs.

Il existe déjà des procédés de traitement de documents de transport ou de logistique, mettant en oeuvre des stations de numérisation de bons de livraison et un site central de traitement équipé d'un serveur procurant un hébergement, une consultation des images numérisées, et un envoi de ces images par fax ou par mail.

Le document WO 0165444 divulgue un système et un procédé pour expédier, comptabiliser et suivre des livraisons par transporteur, mettant en oeuvre des équipements locaux de numérisation et de transmission de bons de livraison. Ce procédé prévoit la fourniture d'informations d'expédition à partir d'un dispositif distant, via un réseau de communication, à un système serveur, la création d'un numéro de suivi pour l'expédition, et l'envoi de ce numéro d'identification au dispositif distant.

On connaît aussi, notamment par le document US 6,285,916, un système de suivi de colis (Parcel Tracking) multi-étage, dans lequel les livreurs utilisent des équipements de saisie portables prévus pour obtenir une signature de réception de livraison qui ensuite numérisée, lire un code barre apposé sur le colis livré, et pour transmettre les données ainsi collectées à un site central.

Cependant, il s'avère que les procédés actuels de traitement et de suivi des bons de livraison ne permettent pas de fournir à tous les acteurs autorisés de la chaîne : -clients, commissionnaires, transporteurs-livreurs -, un accès aisé et rapide à tous les bons de livraison, car on observe en pratique un taux élevé de rejet de bons de livraison numérisés et transmis.

Le but de la présente invention est de procurer un procédé de traitement de documents associés à des opérations logistiques, qui permette d'obtenir de la part d'un livreur la preuve effective de la livraison d'un bien à un destinataire, à moindre coût et avec des temps de traitement inférieurs à ceux observés avec les procédés actuels.

Cet objectif est atteint avec un procédé de traitement de documents associés à des opérations logistiques, notamment des bons de livraison, comprenant :
- une numérisation de ces documents pour générer des fichiers images desdits documents ;
- sur un site central de traitement, une analyse desdits fichiers images pour déterminer des données d'identification de chacun desdits fichiers images, et un archivage desdits fichiers images ainsi identifiés.

Suivant l'invention, le procédé comprend en outre, pour chaque fichier image d'un document dont l'identification n'a pas abouti, une transmission, vers des moyens de visualisation graphique, d'un composant logiciel de type applet prévu pour appeler l'image de ce document, une saisie de données d'identification dudit document extraites de ladite image appelée, une génération, à partir des données d'identification ainsi saisies, d'un fichier indexé associé au fichier image dudit document, et un archivage dudit fichier image.

Ainsi, le procédé de traitement de documents selon l'invention permet d'accroître significativement le taux d'identification et d'indexation des bons de livraison ainsi traités, et de fournir ainsi un haut niveau de fiabilité dans la traçabilité des livraisons. Par ailleurs, l'utilisation d'une transmission par applet rend impossible toute modification des fichiers images, ce qui contribue à sécuriser le système complet de traitement des bons de livraison. Le procédé de traitement selon l'invention présente l'avantage majeur de rendre accessible à tout client autorisé la consultation des images numérisées des bons de livraison.

Par ailleurs, avec le procédé de traitement selon l'invention, l'opérateur du site central devient un tiers de confiance pour ses clients. Grâce à une architecture de base de données sur mode ASP (Application Service Provider), le procédé de traitement selon l'invention permet de répondre à tous types de demandes de clients tels que des expéditeurs, des commissionnaires en transport et des transporteurs livreurs.

Dans un premier mode de réalisation de l'invention, la numérisation des documents est effectuée sur une pluralité de sites locaux, et les fichiers images issus de cette numérisation sont transmis au site central de traitement via des moyens de communication. Les équipements de numérisation et de transmission peuvent être avantageusement identifiés par des données uniques d'identification comprenant par exemple une adresse IP (Internet Protocole) fixe.

Dans un second mode de réalisation de l'invention, le procédé de gestion comprend en outre une transmission initiale par télécopie des documents depuis des sites de locaux vers le site central de traitement, suivie d'une numérisation de ces documents ainsi transmis pour générer des fichiers images desdits documents.

Le procédé de traitement selon l'invention peut en outre avantageusement comprendre une consultation par tout opérateur autorisé de l'image d'un bon de livraison dont le fichier image a été préalablement archivé, cette consultation étant obtenue par envoi, sur un poste de consultation connecté via des moyens de communication aux moyens de serveur principal, d'un composant logiciel de type applet appelant ladite image.

On dispose ainsi avec le procédé selon l'invention d'un outil efficace permettant de centraliser des documents au moyen de la technologie ASP, de reconnaître ces documents avec la technologie OCR et un traitement manuel, de les indexer via la technologie EDI et de restituer ces documents sur différentes plateformes numériques tels que des ordinateur personnels (PC), des agendas électroniques (PDA),ou des téléphones portables implémentant les technologies GSM ou UMTS.

Le procédé selon l'invention peut en outre comprendre une recherche d'un bon de livraison à consulter, selon des critères associés à tout ou partie des données d'identification dudit bon de livraison.

Il est aussi avantageusement prévu une fusion de fichiers images de documents avec un ou plusieurs fichiers complémentaires relatifs à des émetteurs desdits documents.

Par ailleurs, l'analyse des fichiers images de documents comprend en outre une reconnaissance d'un code barre situé sur lesdits documents.

Les fichiers indexés sont de préférence stockés dans une base de données accessible uniquement en lecture.

Suivant un autre aspect de l'invention, il est proposé un système de traitement de documents associés à des opérations logistiques, notamment des bons de livraison, mettant en oeuvre le procédé selon l'invention, comprenant :
- des moyens pour numériser ces documents de façon à générer des fichiers images desdits documents ;
- sur un site central de traitement, des moyens de serveur principal comportant des moyens pour analyser lesdits fichiers images de façon à déterminer des données d'identification de chacun desdits fichiers images, et des moyens pour archiver lesdits fichiers images ainsi identifiés.

Suivant l'invention, le système comprend en outre :
- des moyens pour transmettre, pour chaque fichier image d'un document dont l'identification n'a pas abouti, vers des moyens de visualisation graphique un composant logiciel de type applet prévu pour appeler l'image dudit document,
- des moyens pour saisir des données d'identification dudit document extraites de ladite image appelée, et
- des moyens pour générer, à partir des données d'identification ainsi saisies, un fichier indexé associé au fichier image dudit document.

Dans un premier mode de réalisation d'un système selon l'invention, les moyens de numérisation de documents sont implantés dans une pluralité de sites locaux, ces moyens de numérisation coopérant avec des moyens de transmission pour transmettre, via des moyens de communication, les documents numérisés au site central de traitement.

Dans un second mode de réalisation de l'invention, les moyens de numérisation de documents sont implantés sur le site central, et le système comprend en outre des moyens serveurs de télécopie connectés, via des moyens de télécommunication, à une pluralité de moyens locaux de télécopie implantés dans les sites locaux, ces moyens serveurs de télécopie étant agencés pour recevoir par des télécopies de documents en provenance des sites locaux.

Le système selon l'invention peut alors comprendre outre des moyens pour identifier le site local de provenance d'un document reçu en télécopie, par exemple par le numéro d'appel utilisé pour cette télécopie.

On peut avantageusement prévoir que les moyens de serveur principal soient reliés et coopèrent avec un serveur de codes barre prévu pour reconnaître des codes barre présents dans un fichier image reçu, et avec un serveur de fusion externe prévu pour réaliser une fusion des fichiers images avec des codes barre associés et avec des fichiers complémentaires. Le serveur de fusion externe peut en outre être prévu pour stocker des fichiers indexés.

Les moyens de serveur principal sont de préférence agencés pour émettre, en réponse à une requête d'un opérateur depuis un poste de travail connecté aux moyens de serveur principal, des composants logiciels de type applet prévus pour appeler des images de bons de livraison.

Le système de traitement selon l'invention peut en outre comprendre un serveur de données liées à des codes barre d'un opérateur du système, ce serveur de données coopérant avec au moins un équipement de numérisation, ainsi que des moyens de contrôle et de facturation coopérant avec les moyens de serveur principal.

D'autres avantages et caractéristiques de l'invention apparaîtront à l'examen de la description détaillée d'un mode de mise en oeuvre nullement limitatif, et des dessins annexés sur lesquels :
- la figure 1 est une vue synoptique d'un premier mode de réalisation d'un système de traitement de documents selon l'invention ;
- la figure 2 représente une interface graphique mise en oeuvre dans le centre de traitement manuel d'un système selon l'invention, utilisée pour la visualisation du recto d'un bon de livraison ;
- la figure 3 représente aussi une interface graphique mise en oeuvre dans un centre de traitement manuel d'un système selon l'invention, utilisée pour la visualisation du verso d'un bon de livraison et affichant une fenêtre de saisie de données d'identification ;
- la figure 4 représente une interface graphique mise en oeuvre dans un centre de traitement manuel, pour visualiser des données statistiques individuelles d'un opérateur ;
- la figure 5 représente une interface graphique mise en oeuvre sur le serveur principal, pour afficher une liste de commissionnaires utilisateurs du système selon l'invention ;
- la figure 6 représente une interface graphique mise en oeuvre sur le serveur principal, pour fournir un formulaire de modification de données relatives à un transporteur-livreur impliqué dans une chaîne logistique traitée avec le procédé selon l'invention ;
- la figure 7 représente une interface graphique mise en oeuvre sur un poste de consultation d'un utilisateur du système de traitement selon l'invention, fournissant une liste de comptes clients et un formulaire de modification d'un compte ;
- la figure 8 représente une interface graphique mise en oeuvre sur un poste de consultation, pour saisir des données de sélection d'un bon de livraison archivé qu'un utilisateur souhaite consulter ;
- la figure 9 représente une interface graphique mise en oeuvre sur un poste de consultation, illustrant la visualisation de l'image d'un bon de livraison, en réponse à une requête de visualisation ; et
- la figure 10 est une vue synoptique d'un second mode de réalisation d'un système de traitement de documents selon l'invention.

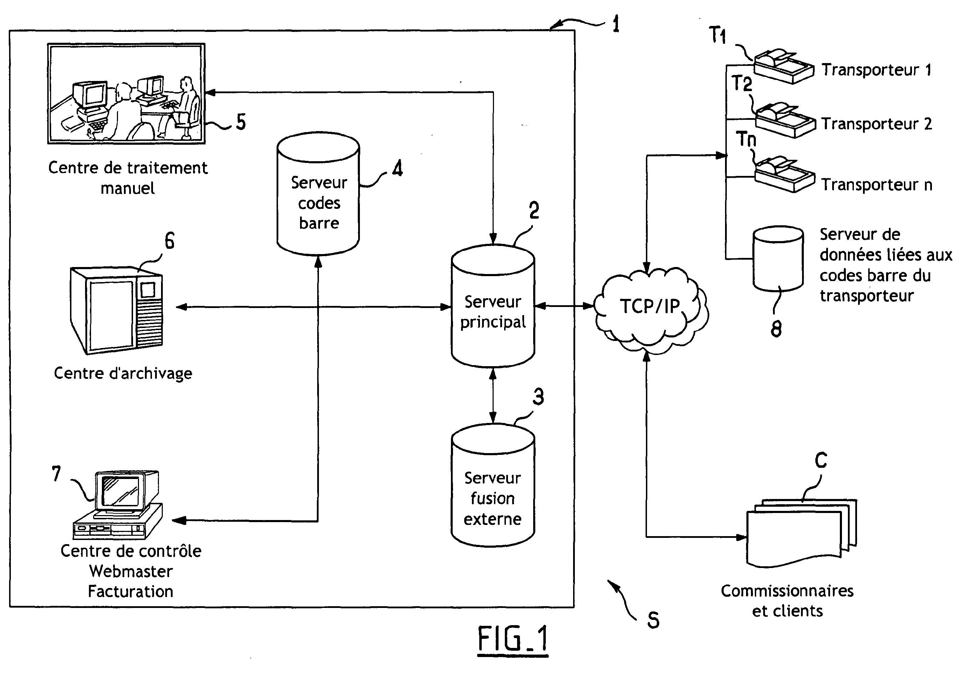

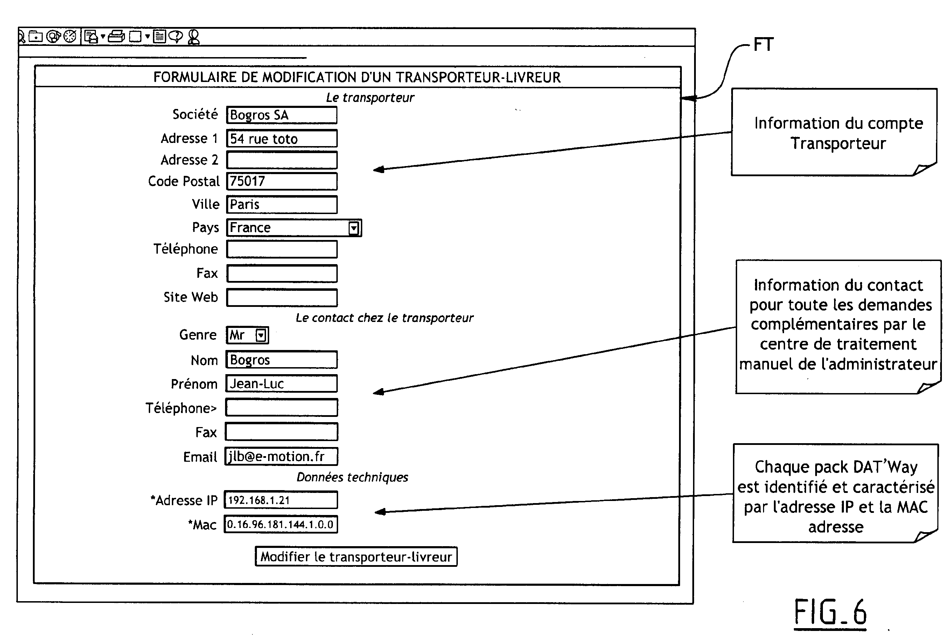

On va maintenant décrire, en référence aux figures 1 à 9, un premier exemple de réalisation d'un système de traitement de documents selon l'invention.

Ce système S comprend, en référence à la figure 1, sur un site central 1, un serveur principal 2 en liaison, via un réseau de communication selon le protocole TCP/IP, avec des sites locaux de numérisation et de transmission d'une pluralité de transporteurs T1, T2,...,Tn, pouvant inclure des serveurs de données 8 liées aux codes barre des transporteurs, et avec une pluralité C de commissionnaires et de clients. Sur le site central 1, le serveur principal 2 est relié à un serveur de codes barre 4, à un centre d'archivage 6, à un centre de traitement manuel 5, à un centre de contrôle 7 assurant les fonctions d'administration de site Web et de facturation, et à un serveur de fusion externe 3. Il est à noter que le centre de traitement manuel peut être distant par rapport au site central de traitement.

Les liaisons entre les différents éléments du système de traitement selon l'invention peuvent être de nature filaire, sur des réseaux publics ou privés, ou de nature hertzienne.

Un site local de numérisation et de transmission peut être équipé, à titre d'exemple non limitatif, d'une unité centrale et d'un numériseur (scanner). Ce site local de numérisation et de transmission est en outre pourvu d'une fonctionnalité de « pare-feu » (Firewall) interne n'autorisant que l'adresse IP du serveur principal en protocole FTP et http. Par ailleurs, aucun fichier n'est effacé avant réception d'un message de bon traitement en provenance du serveur principal.

Lorsqu'il est prévu un serveur de données liées aux codes barre du transporteur, chaque fichier comprenant les informations à lier avec un bon de livraison est au format texte et ne dépasse pas, à titre d'exemple non limitatif, 1 koctet. Le numéro de code barre du bon de livraison à lier est situé dans le premier champ et est nécessairement présent dans chaque fichier. Un processeur de téléchargement (Upload) entre ce serveur de données et le serveur principal est défini au cas par cas et utilise le protocole FTP.

Le serveur principal 2 procure une sécurisation du traitement des fichiers par une clé multiple combinant l'adresse IP du serveur, l'identifiant ID du transporteur, et les noms des fichiers. Le serveur principal comporte en outre un répertoire d'upload (chargement) lors du transfert et un répertoire final de stockage des images.

La base de données associée au serveur principal 2 est gérée de façon à ce qu'aucune image stockée ne puisse être modifiée.

Le serveur principal 2 assure une gestion du flux de données vers le serveur de codes barre 4 pour une reconnaissance automatique des bons de livraison.

En cas d'échec de reconnaissance du code barre sur le fichier image, le traitement manuel est enclenché, avec comme règles:
- le serveur n'envoie jamais les images directement, mais des applets Java les appelant,
- les utilisateurs de la base de données ne sont autorisés que des commandes SELECT, UPDATE, et INSERT.

Le serveur principal 2 assure une gestion de la fusion des fichiers images avec le code barre et les fichiers complémentaires du transporteur, vers le serveur de fusion externe 3, et une gestion du stockage, de l'archivage et de la restitution des fichiers images.

Le serveur de codes barre 4, qui est en interconnexion directe avec le serveur principal 2, réalise une reconnaissance des codes barre. Au niveau de ce serveur de codes barre 4, aucune modification des images n'est possible, et une gestion des échecs est prévue via le centre de traitement manuel 5.

Le serveur de fusion externe 3, qui est en interconnexion directe avec le serveur principal 2, assure une gestion du transfert des fichiers complémentaires du transporteur via le protocole FTP, une fusion des fichiers images avec le code barre et des fichiers complémentaires du transporteur sur une table d'indexation.

Ce serveur de fusion externe 3 procure en outre un stockage des fichiers indexés sur ce serveur, l'image du bon de livraison restant stockée sur le serveur principal 2 puis dans le centre d'archivage 6. Le serveur de fusion externe 3 procure en outre un lien avec le site Web, le programme dit de « Workflow » ou l'interface EDI (Electronic Document Interface) du transporteur, via des requêtes, sous forme d'applets ou masques, sur les champs du fichier indexé.

Dans le cas où l'expéditeur, le commissionnaire, le transporteur ou le destinataire transmet au fil de l'eau l'intégralité de ses flux logistiques (appelés fichiers d'indexation dans le procédé selon l'invention), chaque document est alors comparé et indexé sur différents éléments(codes barre, référence, code client),la différence issue de la comparaison permettant d'identifier les pièces manquantes.

Si la réponse est positive, on effectue alors une transmission du fichier complet (image et données complémentaires), soit sur un répertoire du serveur du transporteur, soit dans une applet Java sur un site Internet, qui est à définir lors de la configuration initiale.

Le centre d'archivage 6 est équipé d'un serveur de stockage de forte capacité, par exemple 4,4 Teraoctets, en interconnexion SCSI (160 Megaoctects/seconde) avec le serveur principal 2. Ce centre de stockage 6 assure une sécurité des données en archive pendant plusieurs mois, et une restitution des données en moins de 10 secondes après une requête acceptée par le serveur principal 2.

Le centre de traitement manuel 5 est équipé d'un serveur standard pour la fonction «Proxy » et la gestion d'une mémoire tampon de bons de livraison en attente de traitement.

Au niveau du centre de traitement manuel 5, aucune modification des fichiers images n'est possible. Le serveur principal 2 n'envoie jamais les images directement, mais des applets Java les appelant. Par ailleurs, il est prévu un module de gestion des opérateurs et de statistique. Les opérateurs utilisateurs de la base de données ne sont autorisés que pour des commandes SELECT, UPDATE et INSERT.

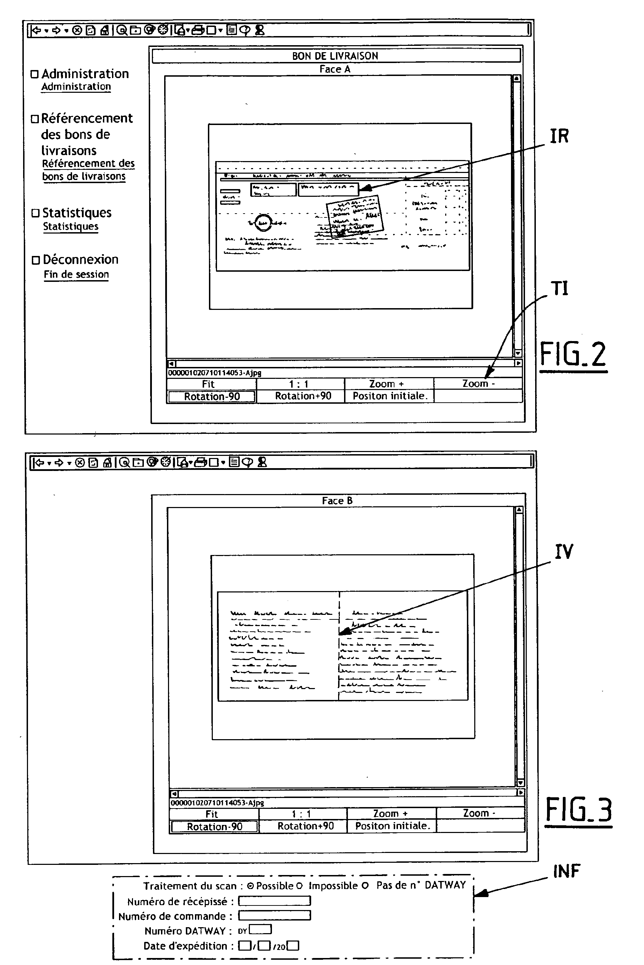

Sur le poste de travail d'un opérateur du centre de traitement manuel 5, apparaît une fenêtre permettant de visualiser l'une et l'autre face d'une image d'un bon de livraison. On peut ainsi visualiser, en référence à la figure 2, une image recto (face A) d'un bon de livraison dans une applet Java. L'opérateur dispose d'outils de traitement d'image pour la recherche des informations. L'autre face B du bon de livraison peut aussi être visualisée, sous la forme d'une image verso IV dans l'applet Java. Des fonctions et champs INF liés aux informations trouvées sur le bon de livraison sont disponibles, en référence à la figure 3.

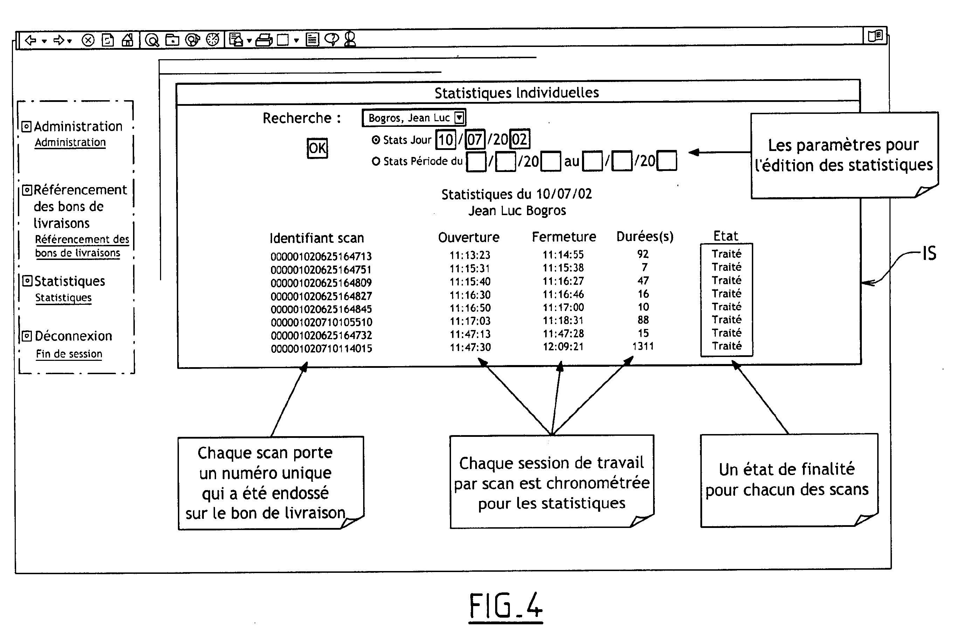

L'outil informatique disponible sur les postes de travail du centre de traitement manuel inclut une commande « statistiques », en référence à la figure 4. En réponse à une recherche au nom d'un opérateur, apparaît, pour des paramètres pour l'édition des statistiques IS, l'ensemble des traitements effectués par cet opérateur. Ainsi, chaque image numérisée (scan) porte un numéro unique qui est encapsulé dans le nom du fichier informatique du bon de livraison.

Chaque session de travail par scan est chronométrée pour les statistiques, et un état de finalité est fourni pour chacun des documents numérisés (scans).

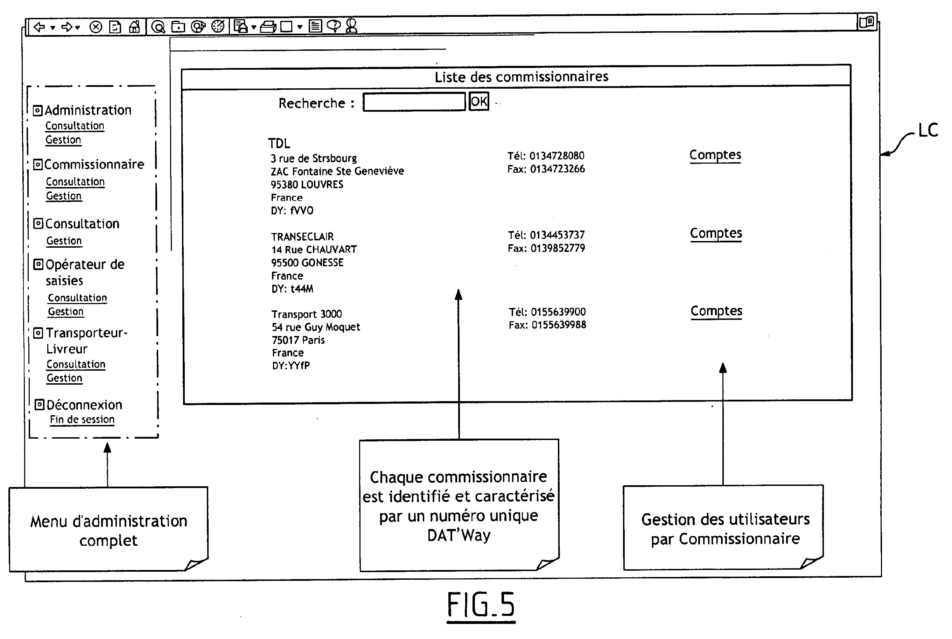

Le procédé selon l'invention propose en outre un module d'administration général LC comportant, en référence à la figure 5, un menu d'administration complet incluant les items : « Administration », « Commissionnaire », « Consultation », « Opérateur de saisie », et « Transporteur-Livreur ». Chaque commissionnaire est identifié et caractérisé par un numéro unique, et il est proposé une gestion des utilisateurs par Commissionnaire.

Ce module d'administration général est en outre conçu pour enregistrer :
- le type de service,
- le type de matériel,
- la présence d un fichier d indexation,
- l'appartenance à un réseau de transporteur, ou à un commissionnaire.

Chaque équipement local de numérisation et de transmission est identifié et caractérisé par son adresse IP et son adresse MAC.

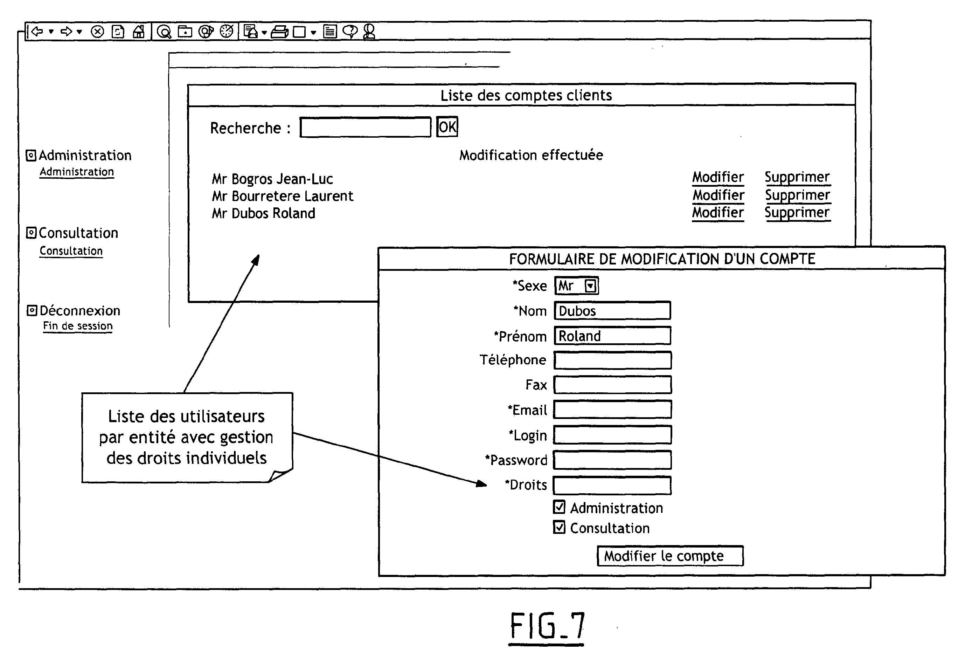

On va maintenant décrire, en référence aux figures 7 à 9, un exemple d'utilisation du procédé et du système de traitement selon l'invention. Dans un premier temps, un opérateur de transport insère ses bons émargés dans la station de numérisation installée sur son site. Après numérisation, ces bons de livraison sont conservés par l'opérateur de transport. Les documents ainsi numérisés sont transmis sur le site central de traitement 1, pour y être analysés par leurs codes barre et indexés.

Un client ou un commissionnaire du transporteur peut ensuite consulter les bons de livraison ainsi numérisés et stockés, à partir d'un poste de travail connecté via Intemet au serveur principal 2. La recherche d'un bon à consulter peut être effectuée selon l'un et/ou l'autre des critères suivants :
- à partir d'un numéro de récépissé,
- à partir d'un numéro de code barre,
- à partir d'un numéro de commande client,
- à partir d'une date d'expédition, en complément de l'un des trois critères précédents, selon un mode de recherche simple ou de recherche avancée.

Un module de consultation procure notamment une liste des comptes clients et un formulaire de modification d'un compte, en référence à la figure 7.

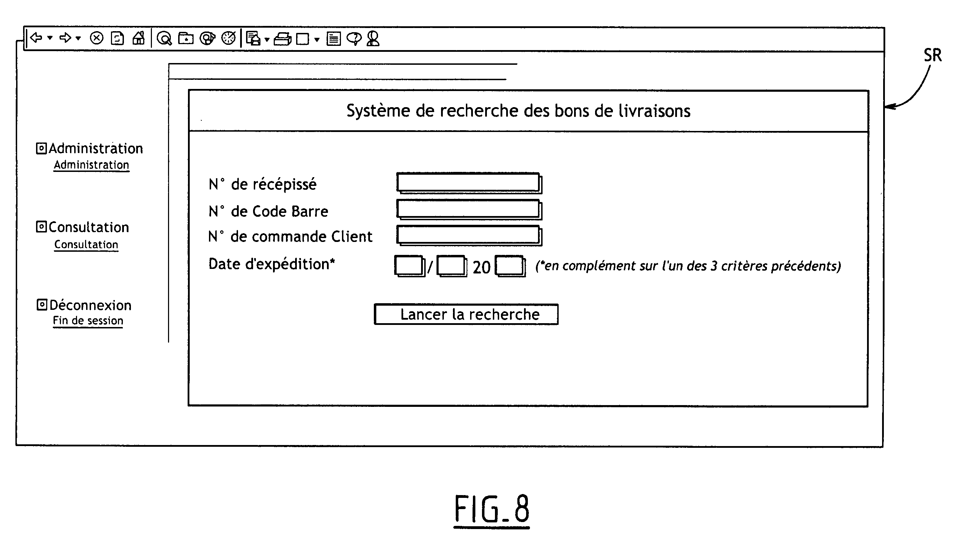

Ce module de consultation implémente un système de recherche des bons de livraison, en référence à la figure 8, dans lequel l'utilisateur peut entrer, pour lancer une recherche, des données de recherche selon les critères précités.

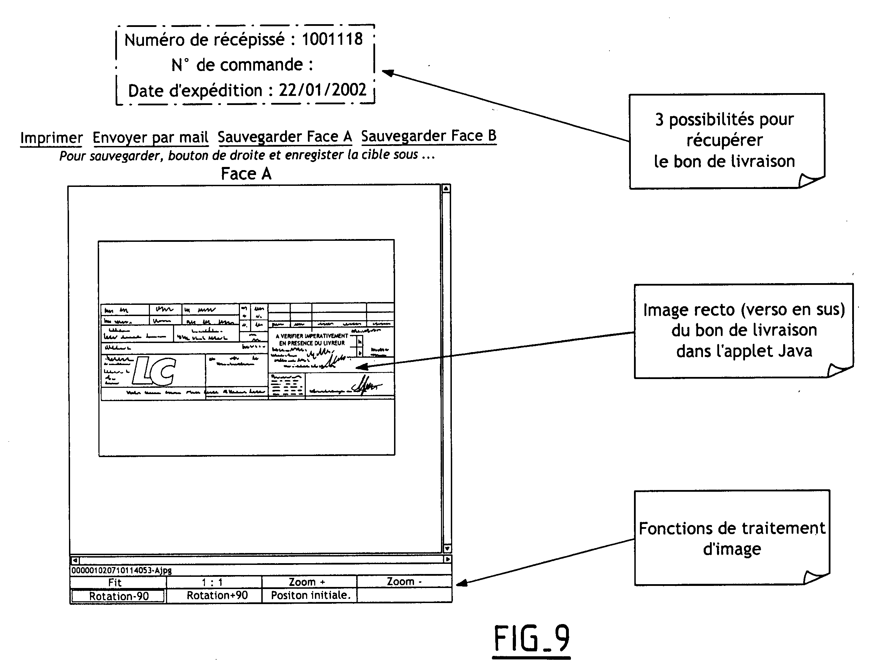

Le résultat de la recherche apparaît sur l'écran d'un utilisateur sous la forme de l'image numérisée recto ou verso d'un bon de livraison, dans une applet Java, en référence à la figure 9. L'utilisateur dispose de fonctions de traitement d'image incluant notamment des fonctions de rotation et de zoom, et une fonction d'alerte permettant à un utilisateur de créer automatiquement la remontée de l'image ou de connaître sa disponibilité à partir d éléments d'identification de celle-ci. Cette fonction d'alerte peut être mise en oeuvre via des courriers, des messages de type SMS, MMS, ou des télécopies.

Il est également prévu un module de facturation permettant aux clients du système de traitement selon l'invention de recevoir une facture périodique avec des éléments relatifs à leur abonnement, à leur trafic et à des données de maintenance.

Les données de trafic d'un client incluent par exemple :
- le nombre de documents numérisés (scans) émis par son équipement de numérisation et de transmission vers le serveur principal,
- le nombre de documents numérisés (scans) traités avec succès par le serveur de codes barre,
- le nombre de documents numérisés (scans) traités avec succès par le centre de traitement manuel,
- le nombre de documents numérisés (scans) traités par le serveur de codes barre et par le centre de traitement manuel sans succès de référencement, et
- le nombre de documents numérisés (scans) illisibles ayant fait l'objet d'une demande de réexpédition.

Les clients utilisateurs du système de traitement selon l'invention peuvent consulter en ligne le détail de chacune de ces rubriques, avec la possibilité de visualiser chaque document numérisé (scan).

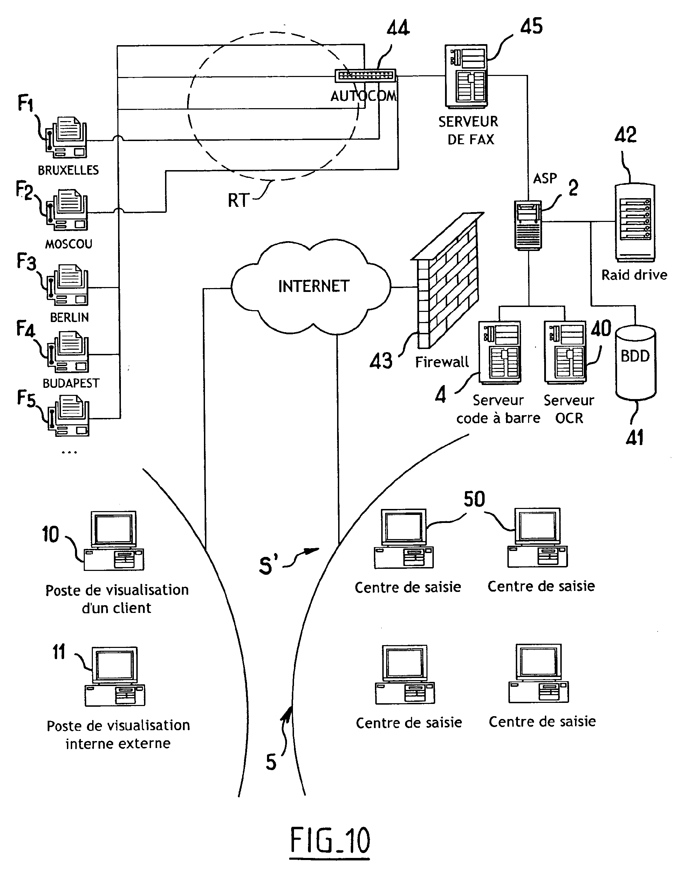

On va maintenant décrire, en référence à la figure 10, un second exemple de réalisation d'un système de traitement de documents selon l'invention.

Le système S' de gestion de documents selon l'invention est construit autour d'un serveur principal d'exploitation 2, par exemple du type ASP, connecté à un serveur de fax 45, à un serveur de code à barres 4, à un serveur de reconnaissance de caractère OCR 40, à une base de données 41, et à une unité de stockage 42, par exemple du type « Raid drive ». Le serveur principal d'exploitation 2 est relié à travers un dispositif de sécurité 43 de type « Pare-feu » (Firewall) au réseau Intemet, tandis que le serveur de fax 45 est relié via un autocommutateur 44 à un réseau de télécommunication RT.

Le système de gestion S' selon l'invention comprend en outre un ou plusieurs centres 5 de saisie manuelle dotés de postes de travail 50 configurés pour assurer les mêmes fonctions que celles décrites précédemment dans le premier exemple de réalisation, à savoir, une visualisation graphique des fichiers images de documents n'ayant pu être identifiés automatiquement, une saisie de données d'identification extraites des images visualisées et une génération, à partir des données d'identification ainsi saisies, de fichiers indexés associés au fichiers images de ces documents. Le système de gestion S' intègre également des postes de visualisation 10, 11, installés chez les clients de la société exploitant le procédé, ces postes de visualisation pouvant être internes ou externes aux sites de ces clients.

Dans ce second mode de réalisation, un chauffeur ayant effectué sa livraison sur un site de destination envoie le bon de livraison émargé par le destinataire de cette livraison, depuis un télécopieur (fax) F1,F2,F3,F4,F5 équipant ce site de livraison, en composant un numéro « vert » ou équivalent par pays de livraison. Les appels provenant de ces sites de livraison sont identifiés par leurs numéros et la télécopie (fax) est envoyée sur le serveur de fax 45 qui traite l'image du bon de livraison émargé, puis la référence dans la base de données 41.

Le traitement du fichier image ainsi stocké est alors similaire à celui effectué dans le premier mode de réalisation précédemment décrit et l'on pourra avantageusement se reporter à la description de ce premier mode de réalisation. Ainsi, les centres de saisie 50 assurent, éventuellement à distance, la fonction d'identification et de saisie manuelle de données issues de fichiers images de documents qui n'ont pu être traités automatiquement, en particulier des numéros d'identification de type CMR (« Customer Managed Relationships ») ou de référence unique, des codes postaux et des dates.

Par ailleurs, de façon semblable à celle du premier mode de réalisation précédemment décrit, les clients de l'exploitant du procédé de gestion selon l'invention peuvent, depuis leurs postes ou stations de travail 10, 11, consulter les fichiers images de leurs bons de livraison, préalablement stockés dans la base de données 41 ou dans un centre d'archivage, par exemple à partir de recherches par numéro de CMR, de référence unique, code postal de départ ou d'arrivée, ou par date.

Bien sûr, l'invention n'est pas limitée aux exemples qui viennent d'être décrits et de nombreux aménagements peuvent être apportés à ces exemples sans sortir du cadre de l'invention. On peut ainsi prévoir, pour l'implémentation du procédé de traitement selon l'invention, d'autres protocoles de communication que l'actuel protocole TCP/IP, ainsi que l'utilisation d'autres langages que le langage Java.

## Revendications

1. Procédé de traitement de documents associés à des opérations logistiques, notamment des bons de livraison, comprenant :
- une numérisation de ces documents pour générer des fichiers images desdits documents ;
- sur un site central de traitement, une analyse desdits fichiers images pour déterminer des données d'identification de chacun desdits fichiers images, et un archivage desdits fichiers images ainsi identifiés,
**caractérisé en ce que** le procédé comprend en outre, pour chaque fichier image d'un document dont l'identification n'a pas abouti, une transmission, vers des moyens de visualisation graphique, d'un composant logiciel de type applet prévu pour appeler l'image dudit document, une saisie de données d'identification dudit document extraites de ladite image appelée, une génération, à partir des données d'identification ainsi saisies, d'un fichier indexé associé au fichier image dudit document, et un archivage dudit fichier image.

2. Procédé selon la revendication 1, **caractérisé en ce que** la numérisation des documents est effectuée sur une pluralité de sites locaux, et **en ce que** les fichiers images issus de cette numérisation sont transmis au site central de traitement via des moyens de communication.

3. Procédé selon la revendication 2, **caractérisé en ce qu'**il comprend en outre une identification d'équipements de numérisation et de transmission installés dans les sites locaux, par des données uniques d'identification.

4. Procédé selon la revendication 3, **caractérisé en ce que** les données d'identification d'un équipement de numérisation et de transmission comprennent une adresse IP (Intemet Protocole) fixe.

5. Procédé selon la revendication 1, **caractérisé en ce qu'**il comprend en outre une transmission initiale par télécopie des documents depuis des sites de locaux vers le site central de traitement, suivie d'une numérisation desdits documents ainsi transmis pour générer des fichiers images desdits documents.

6. Procédé selon l'une des revendication précédentes, **caractérisé en ce qu'**il comprend en outre une consultation par tout opérateur autorisé de l'image d'un bon de livraison dont le fichier image a été préalablement archivé, cette consultation étant obtenue par envoi, sur un poste de consultation connecté via des moyens de communication aux moyens de serveur principal, d'un composant logiciel de type applet appelant ladite image.

7. Procédé selon la revendication 6, **caractérisé en ce qu'**il comprend en outre une recherche d'un bon de livraison à consulter, selon des critères associés à tout ou partie des données d'identification dudit bon de livraison.

8. Procédé selon l'une des revendications précédentes, **caractérisé en ce qu'**il comprend en outre une fusion de fichiers images de documents avec un ou plusieurs fichiers complémentaires relatifs à des émetteurs desdits documents.

9. Procédé selon l'une des revendications précédentes, **caractérisé en ce que** l'analyse des fichiers images de documents comprend une reconnaissance d'un code barre situé sur lesdits documents.

10. Procédé selon l'une des revendications précédentes, **caractérisés en ce que** les fichiers indexés sont stockés dans une base de données accessible uniquement en lecture.

11. Procédé selon l'une des revendications précédentes, caractérisé en ce chaque image numérisée porte un numéro unique qui est encapsulé dans le nom du fichier image.

12. Procédé selon l'une des revendications précédentes, **caractérisé en ce qu'**il procure en outre une fonction d'alerte permettant à un utilisateur de connaître la disponibilité d'une image d'un document, à partir d éléments d'identification de celle-ci.

13. Système (S, S') de traitement de documents associés à des opérations logistiques, notamment des bons de livraison, mettant en oeuvre le procédé selon l'une quelconque des revendications précédentes, comprenant :
- des moyens pour numériser ces documents de façon à générer des fichiers images desdits documents ;
- sur un site central de traitement, des moyens de serveur principal (2) comportant des moyens pour analyser lesdits fichiers images de façon à déterminer des données d'identification de chacun desdits fichiers images, et des moyens (6, 41) pour archiver lesdits fichiers images ainsi identifiés,
**caractérisé en ce qu'**il comprend en outre,
- des moyens pour transmettre, pour chaque fichier image d'un document dont l'identification n'a pas abouti, vers des moyens de visualisation graphique un composant logiciel de type applet prévu pour appeler l'image dudit document,
- des moyens (5, 50) pour saisir des données d'identification dudit document extraites de ladite image appelée,
- des moyens pour générer, à partir des données d'identification ainsi saisies, un fichier indexé associé au fichier image dudit document.

14. Système (S) selon la revendication 13, **caractérisé en ce que** les moyens de numérisation de documents sont implantés dans une pluralité de sites locaux, ces moyens de numérisation coopérant avec des moyens de transmission pour transmettre, via des moyens de communication, lesdits documents numérisés au site central de traitement.

15. Système selon la revendication 13, **caractérisé en ce que** les moyens de numérisation de documents sont implantés sur le site central, et **en ce qu'**il comprend en outre des moyens serveurs de télécopie (45) connectés, via des moyens de télécommunication (44, RT), à une pluralité de moyens locaux de télécopie (F1, F2, F3, F4, F5) implantés dans les sites locaux, lesdits moyens serveurs de télécopie (45) étant agencés pour recevoir des télécopies de documents en provenance des sites locaux.

16. Système (S') selon la revendication 15, **caractérisé en ce qu'**il comprend en outre des moyens pour identifier le site local de provenance d'un document reçu en télécopie, par le numéro d'appel utilisé pour cette télécopie.

17. Système (S, S') selon l'une des revendications 13 à 16, **caractérisé en ce que** les moyens de serveur principal (2) sont reliés et coopèrent avec un serveur de codes barre (4) prévu pour reconnaître des codes barre présents dans un fichier image reçu, et avec un serveur de fusion externe (3) prévu pour réaliser une fusion des fichiers images avec des codes barre associés et avec des fichiers complémentaires.

18. Système selon la revendication 17, **caractérisé en ce que** le serveur de fusion externe est en outre prévu pour stocker des fichiers indexés.

19. Système (S, S') selon l'une des revendications 13 à 18, **caractérisé en ce que** les moyens de serveur principal (2) sont agencés pour émettre, en réponse à une requête d'un opérateur depuis un poste de travail (10, 11, C) connecté audits moyens de serveur principal (2), des composants logiciels de type applet prévus pour appeler des images de bons de livraison.

20. Système (S) selon l'une des revendications 13 à 19, **caractérisé en ce qu'**il comprend en outre un serveur de données (8) liées à des codes barre d'un opérateur du système.

21. Système (S) selon l'une des revendications 13 à 20, **caractérisé en ce qu'**il comprend en outre des moyens de contrôle et de facturation (7) coopérant avec les moyens de serveur principal (2).

22. Système (S) selon l'une des revendications 13 à 21 et la revendication 14, **caractérisé en ce que** les moyens de numérisation et de transmission (T1, T2, Tn) sont en outre prévus pour endosser les documents traités.
